# EUROPÄISCHE PATENTSCHRIFT

(11) **EP 2 743 892 B1**
(45) Veröffentlichungstag und Bekanntmachung des Hinweises auf die Patenterteilung: **23.03.2022**
(21) Anmeldenummer: 13197538.5
(22) Anmeldetag: 16.12.2013
(51) Int. Cl.: G07C 9/00, G06K 7/10

(54) **VORRICHTUNG UND VERFAHREN ZUM LAGERN VON GEGENSTÄNDEN**
METHOD AND DEVICE FOR STORING OBJECTS
DISPOSITIF ET PROCÉDÉ DE STOCKAGE D'OBJETS

(30) Priorität: 14.12.2012 DE 202012011962 U
(43) Veröffentlichungstag der Anmeldung: 18.06.2014
(73) Patentinhaber: Astra Gesellschaft Für Asset Management MbH&Co. Kg, 30890 Barsinghausen (DE)
(72) Erfinder: Stobbe, Anatoli, 30890 Barsinghausen (DE)
(74) Vertreter: Patentanwälte Thömen & Körner

(56) Entgegenhaltungen:
- DE-A1-102008 047 084
- DE-T2- 60 224 519
- US-A1- 2008 094 214
- US-A1- 2009 212 948
- US-A1- 2009 219 141
- US-A1- 2011 115 610
- US-A1- 2011 304 433
- Anonymous: "RFID - Wikipedia", , 16. März 2006 (2006-03-16), XP055339823, Gefunden im Internet: URL:https://de.wikipedia.org/w/index.php?t itle=RFID&oldid=14711123 [gefunden am 2017-01-27]

## Beschreibung

Die Erfindung betrifft eine Vorrichtung zum Lagern von Gegenständen nach dem Oberbegriff des Anspruchs 1 und ein Verfahren zum Lagern von Gegenständen nach dem Oberbegriff des Anspruchs 10.

Aus der gattungsbildenden DE 602 24 519 T2 ist eine Vorrichtung zum Lagern von Gegenständen, die von beliebigen, identifizierten Benutzern benutzt werden können, bekannt. Bei dieser Vorrichtung ist ein umschlossener Raum vorhanden, der mit einer verschließbaren Tür verschlossen ist, wobei die verschließbare Tür ein Schloss hat, das mit einem Code oder einem codierten Element welches die Identifikation des Benutzers erfordert, geöffnet werden kann. Jeder Gegenstand, der sich in dem Raum befindet, ist mit einer individuellen, aus der Ferne lesbaren Identifiziervorrichtung versehen. Der Raum besitzt mindestens einen ID-Leser, der die aus der Ferne lesbaren Identifiziervorrichtungen abfragt, um das Vorhandensein mehrerer Gegenstände festzustellen. Der ID-Leser ist darauf eingestellt, das Vorhandensein eines Gegenstands nur dann zu registrieren, wenn die Tür geschlossen ist. Der ID-Leser sowie das Schloss sind mit einer Datenverarbeitungsanlage zum Registrieren von Benutzeridentitäten und einem Inhalt verbunden.

Aufgrund des Anmeldetages der genannten Druckschrift und des zu diesem Zeitpunkt bekannten Standes der Technik muss auf eine Identifiziervorrichtung und einen ID-Leser geschlossen werden, der im HF-Bereich arbeitet und aufgrund dieses Frequenzbereichs und der damit verbundenen geringen Datenrate eine relativ lange Zeit benötigt, um nach Vereinzelung der Identifiziervorrichtungen alle Gegenstände zu erfassen.

Bei einer Vereinzelung ergeht zunächst ein Weckbefehl an alle RFID-Plättchen, worauf diese zu unterschiedlichen Zeiten mit der Aussendung ihrer Ident-Daten beginnen wollen. Sobald der ID-Leser den Beginn einer Aussendung eines zuerst sendenden RFID-Plättchens erkennt, sendet er ein Stopp-Signal, das alle anderen RFID-Plättchen, die noch nicht mit der Aussendung begonnen haben, deaktiviert. Nachdem das zuerst sendende RFID-Plättchen erfolgreich registriert wurde, wird es gezielt für die nächsten Registrierungszyklen deaktiviert. Hingegen werden nun alle übrigen noch nicht registrierten RFID-Plättchen durch einen erneuten Weckbefehl zur Aussendung veranlasst. Der vorbeschriebene Vorgang wiederholt sich solange, bis das letzte, mit der größten Verzögerungszeit ausgestattete RFID-Plättchen erfasst ist.

Der beschriebene Vorgang läuft keineswegs stets komplikationslos ab. Es ist nicht immer sicher, dass nach Beginn einer Aussendung alle restlichen RFID-Plättchen rechtzeitig gestoppt werden können. Denn wenn zwei oder mehrere RFID-Plättchen gleichzeitig senden, ist in der Regel keine Identifikation möglich und es muss wieder neu mit einem Weckbefehl begonnen werden, was natürlich die für die Identifizierung aller RFID-Plättchen benötigte Zeit gegenüber dem theoretischen Minimalwert eventuell erheblich verlängert.

Geht man davon aus, dass in dem umschlossenen Raum bis zu mehreren hundert Gegenstände lagern können, ist eine schnellstmögliche Erfassung aller Gegenstände erstrebenswert. Denn es muss verhindert werden, dass eine zu schnelle Entnahme der Gegenstände durch unterschiedliche Benutzer in Stosszeiten die richtige Zuordnung der entnommenen Gegenstände zu den Benutzern durcheinander bringt. Eine Betriebsfrequenz im HF-Bereich lässt die praktische Erfüllung dieser Anforderungen nicht erwarten.

Aus der US 2011/0304433 A1 ist eine Vorrichtung zur Bereitstellung sauberer Handtücher und Rücknahme gebrauchter Handtücher bekannt, die zwei getrennte Behälter umfasst. Die Handtücher sind mit RFID-Plättchen ausgestattet und die Behälter enthalten Lesegeräte zum berührungslosen Lesen der RFID-Plättchen. Weiterhin sind die Behälter durch Metallplatten gegenseitig und nach außen hin gegen austretende elektromagnetische Felder abgeschirmt. Die Entnahme und Rückgabe der Handtücher erfolgt durch Türen, die nach einem Öffne- und Schließvorgang jeweils die zugeordneten Lesegeräte mit der Erfassung der in den Behältern befindlichen Handtücher steuern. Bis zur Erfassung sämtlicher mit RFID-Plättchen ausgestatteter Handtücher bleiben die Türen mittels einer Verriegelungsvorrichtung geschlossen. Eine Angabe über die Arbeitsfrequenz der RFID-Plättchen und Lesegeräte ist der Druckschrift nicht zu entnehmen.

In Anonymous: "RFID - Wikipedia", 16. März 2006 (2006-03-16), XP055339823, gefunden im Internet:
URL:https://de.wikipedia.org/w/index.php?
title=RFID&oldid=14711123
sind Angaben über Frequenzbereiche und Lesegeschwindigkeiten von RFID-Systemen enthalten.

Ferner ist aus der US 2008/094214 A1 ein System zur Verwaltung von Inventar in Schränken mittels RFID-Plättchen und Lesegeräten bekannt. Darin ist beschrieben, dass zur Veränderung von Feldverteilungen eine Tür oder Schublade verschoben werden kann, während die RFID-Plättchen gelesen werden.

Der Erfindung liegt die Aufgabe zugrunde, bei einer Vorrichtung zum Lagern von Gegenständen nach dem Oberbegriff des Anspruchs 1 und einem Verfahren zum Lagern von Gegenständen nach dem Oberbegriff des Anspruchs 10 die sichere Registrierung dieser Gegenstände auch bei schneller Entnahme zu gewährleisten.

Diese Aufgabe wird bei einer Vorrichtung zum Lagern von Gegenständen nach dem Oberbegriff des Anspruchs 1 und einem Verfahren zum Lagern von Gegenständen nach dem Oberbegriff des Anspruchs 10 durch die Merkmale des jeweiligen Anspruchs gelöst.

Weiterbildungen und vorteilhafte Ausgestaltungen ergeben sich aus den Unteransprüchen.

Aufgrund der im UHF- und SHF-Bereich (ab 300 MHz) möglichen hohen Datenrate ist das Vereinzeln und Lesen einer Vielzahl individueller RFID-Plättchen in kurzer Zeit möglich. Eine Registrierung mehrer hundert mit RFID-Plättchen versehener Gegenstände erfolgt innerhalb von wenigen Sekunden. Wegen der kurzen Wellenlänge im UHF- und SHF-Bereich ist weiter möglich, elektrische Antennen, insbesondere Dipole, einzusetzen. Da die mechanischen Abmessungen der Antennen weitgehend der Wellenlänge entsprechen und zumeist nur geringe elektrische Verlängerungsmittel, wie konzentrierte Induktivitäten oder Kapazitäten erforderlich sind, um Antenneresonanz mit der Betriebswellenlänge zu erzielen, ergibt sich ein guter Antennenwirkungsgrad. Dieser wiederum ermöglicht bei passiven RFID-Plättchen eine Reichweite von mehren Metern.

Die Ausgestaltung der Wände und der Tür mit metallischen Werkstoffen sorgt für Reflexionen der von einer Sendeantenne eines ID-Lesers, nämlich der Leseantenne ausgesandten elektromagnetischen Strahlung und verstärkt und homogenisiert so das elektromagnetische Feld innerhalb des umschlossenen Raums. Dadurch wird eine eventuell nachteilige Richtwirkung der Antenne, also der Leseantennen und der Antennen der RFID-Plättchen, die im ungünstigen Fall eine Registrierung einzelner RFID-Plättchen erschwert oder verhindert würde, kompensiert. Gleichzeitig wird eine Störung benachbarter gleichartiger umschlossener Räume, also solcher Räume, die ebenfalls mit Leseantennen ausgestattet sind und mit RFID-Plättchen versehene Gegenstände lagern, vermieden oder zumindest reduziert.

Das Triggern einer Abfrage des Vorhandenseins von mit RFID-Plättchen versehenen Gegenständen bei geöffneter Tür, darunter wird das Starten des Lesevorgangs durch den ID-Leser verstanden, nutzt die Zeit, während der sich ein Benutzer noch vor oder in dem umschlossenen Raum befindet, zur Vereinzelung und Registrierung der mit RFID-Plättchen versehenen Gegenstände. Dieser Vorgang wird somit frühzeitig eingeleitet und kann daher auch frühzeitig beendet und abgeschlossen werden, nämlich rechtzeitig vor der Registrierung eines nachfolgenden Benutzers durch Lesen dessen Registrierungscodes. Dies gilt sowohl für Dreh- als auch für Schiebetüren.

Gemäß der Erfindung werden mittels des Türsensors unterschiedliche Öffnungswinkel bei einer Drehtür oder Offenstellungen bei einer Schiebetür erfasst und eine Abfrage des Vorhandenseins von mit RFID-Plättchen versehenen Gegenständen bei unterschiedlichen Öffnungswinkeln oder Offenstellungen der Tür mehrmals getriggert.

Diese Maßnahme sorgt dafür, dass sich unterschiedliche Feldverteilung in Abhängigkeit der Öffnungswinkeln oder Offenstellungen der Tür ergeben und damit die Wahrscheinlichkeit einer Erfassung aller RFID-Plättchen im umschlossenen Raum erhöht wird.

Weiterhin ist ein Türschließer mit der Tür gekoppelt, der vorübergehend eine automatische Schließbewegung wenigstens einmal in einer vorgegebenen Schließposition unterbricht, wobei in dieser Position eine Abfrage der mit RFID-Plättchen (26) versehenen Gegenstände (24) getriggert wird.

Dieser spezielle Türschließer sorgt einmal dafür, dass sich die Tür nach Entnahme eines oder mehrerer Gegenstände automatisch schließt und so nach Beendigung des Schließvorganges ohne Zutun eines Vorbenutzers wieder der umschlossene Raum für unbefugte Personen unzugänglich wird. Darüber hinaus wird der Schließvorgang aber auch wenigstens einmal unterbrochen, also die Tür vorübergehend in einer vorgegebenen Schließposition festgehalten. In dieser Position, in der Tür stillsteht, kann die Datenabfrage erfolgen. Diese Datenabfrage kann sich auch mehrmals bei anderen Öffnungswinkeln oder Offenstellungen der Tür und vorübergehendem Stillstand der Tür in einer dieser Positionen während eines automatischen Schließvorgangs wiederholen.

Gemäß einer Weiterbildung der Erfindung können weitere oder alle restlichen Wände des Raumes aus Metall bestehen oder metallische Komponenten umfassen, die sich flächig über die jeweiligen Wände erstrecken.

Durch diese Maßnahme wird der Effekt der Verstärkung und Homogenisierung des elektromagnetischen Felds innerhalb des umschlossenen Raums verbessert und es wird vermieden, dass elektromagnetische Energie des ID-Lesers ungenutzt für eine Kommunikation mit den RFID-Plättchen von der Umgebung des umschlossenen Raums absorbiert wird. Weiterhin wird auch die Abschirmung gegenüber benachbarten gleichartig umschlossenen Räumen verbessert.

Im umschlossenen Raum können mehrere Leseantennen räumlich verteilt angeordnet und mittels wenigstens eines Antennenschalters mit wenigstens einem ID-Leser verbunden sein und durch den Antennenschalter einschaltbar sein gemäß einer Weiterbildung der Erfindung.

Jede Leseantenne sorgt in Verbindung mit den reflektierenden Flächen der Wände und der Tür für eine andere Feldverteilung im umschlossenen Raum, wodurch nach Durchlaufen eines Registrierungszyklus mit allen Antennen die Wahrscheinlichkeit hoch ist, das alle Bereiche des umschlossenen Raums irgendwann innerhalb dieses Registrierungszyklusses mit elektromagnetischer Energie des Lesers ausreichend versorgt wurden und eine vollständige Registrierung aller mit RFID-Plättchen versehener Gegenstände garantiert ist. Neben einem Einschalten von jeweils nur einer Leseantenne ist auch die Parallelschaltung von wenigstens zwei Leseantennen durch den Antennenschalter möglich und führt aufgrund der Überlagerung der elektromagnetischen Felder zweier oder mehr Leseantennen zu weiteren Varianten der Feldverteilung.

Hintergrund dieser genannten Varianten ist die Kompensation von Feldminimalien über einen vollständigen Registrierungszykluss. Grund für eine Nichtregistrierung mit nur einer Leseantenne kann nämlich der Effekt sein, dass durch gegenphasige Überlagerung der elektromagnetischen Felder auch Bereiche geringer Feldstärke oder gar Nullstellen entstehen, in denen vorhandene RFID-Plättchen nicht gelesen werden können. Bei mehreren räumlich verteilten Leseantennen ist es höchst unwahrscheinlich dass in denselben Bereichen wieder geringe Feldstärken oder Nullstellen auftreten. Vielmehr ist davon auszugehen dass die Feldverteilung unterschiedlich ist und RFID-Plättchen, die vorher nicht registriert werden konnten nunmehr registriert werden können.

Gemäß einer Weiterbildung der Erfindung können wenigstens zwei ID-Leser oder wenigstens ein ID-Leser und wenigstens ein Sender eines unmodulierten Trägers vorhanden und sowohl mit dem Antennenschalter einerseits als auch mit der Datenverarbeitungsanlage andererseits verbunden sein. Dabei kann ein erster ID-Leser in einen Sende-Lesemodus geschaltet und mit einer oder mehrerer erster Leseantennen gekoppelt sein und ein zweiter ID-Leser oder Sender eines unmodulierten Trägers ausschließlich in einen Sendemodus zur Energieversorgung von RFID-Plättchen geschaltet und mit einer oder mehrerer zweiter Leseantennen gekoppelt sein.

Für den Fall, dass der erste ID-Leser mit einer oder mehrerer Leseantenne allein nicht in der Lage ist oder war, ein RFID-Plättchen zu lesen, kann durch die Zuschaltung eines weiteren ID-Lesers oder Senders eines unmodulierten Trägers die Energieversorgung des zuvor nicht lesbaren RFID-Plättchens verbessert werden, so dass es trotz ungünstiger Position im Lesefeld des ersten ID-Lesers nun doch gelesen werden kann.

Bei der vorbeschrieben Variante kann die Phasenlage des vom zweiten ID-Leser oder Sender eines unmodulierten Trägers gesendeten Signals gleichphasig oder gegenphasig gegenüber dem vom ersten ID-Leser gesendeten signal sein gemäß einer Weiterbildung der Erfindung.

Hierdurch ist es möglich, durch eine weitere Parametervariante eine für ein einwandfreies Lesen der RFID-Plättchen nötige Feldstärke zu erzielen.

Vorteilhaft ist es, wenn die Frequenz des vom zweiten ID-Leser oder Sender eines unmodulierten Trägers gesendeten Signals gegenüber der Frequenz des vom ersten ID-Leser gesendeten Signals abweicht.

Es ergeben sich dann keine stationären Feldminimalien und Nullstellen, was die Wahrscheinlichkeit einer zuverlässigen Datenübertragung zwischen RFID-Plättchen und ID-Leser deutlich erhöht.

Eine Abfrage des Vorhandenseins von mit RFID-Plättchen versehenen Gegenständen kann nach einem maximalen Öffnungswinkel oder einer maximalen Offenstellung der Tür und anschließender Reduzierung des Öffnungswinkels oder der Offenstellung der Tür ein- oder mehrmals getriggert sein gemäß einer Weiterbildung der Erfindung.

Durch Berücksichtigung dieser Kriterien kann darauf geschlossen werden, dass ein Entnahmevorgang durch einen Benutzer abgeschlossen ist und nun ein aktueller Bestand an Gegenständen erfasst werden kann.

Eine Abfrage des Vorhandenseins von mit RFID-Plättchen versehenen Gegenständen kann zusätzlich bei geschlossener Tür getriggert sein gemäß einer Weiterbildung der Erfindung.

Dadurch kann der aktuelle Bestand bei einer weiteren Konstellation der Feldverteilung im umschlossenen Raum verifiziert werden.

Gemäß einer Weiterbildung der Erfindung ist vorgesehen, dass im umschlossenen Raum vorhandene und/oder dahin neu verbrachte mit RFID-Plättchen versehene Gegenstände in einer Datenbank, auf die die Datenverarbeitungsanlage Zugriff hat, gespeichert sind und dass der gültige Bestand der dem umschlossenen Raum zugeordneten, mit RFID-Plättchen versehenen Gegenstände nur die diesem Raum nach Datenbankinhalt zugeordneten Gegenstände umfasst, während andere, ebenfalls mit RFID-Plättchen versehene und erfasste Gegenstände unberücksichtigt oder als Benutzeridentifikation berücksichtigt sind.

Durch die Datenbank ist eindeutig und unabhängig von registrierten, mit RFID-Plättchen ausgestatteten Gegenständen festgelegt, welche mit RFID-Plättchen ausgestatteten Gegenstände ursprünglich im umschlossenen Raum vorhanden waren. In den Bestand an Gegenständen, die einem bestimmten umschlossen Raum zugeordnet sind, lassen sich so ausschließlich mit RFID-Plättchen ausgestattete Gegenstände einbeziehen, die auch in der zugehörigen Datenbank erfasst sind, während andere Gegenstände mit RFID-Plättchen, die sich außerhalb des umschlossenen Raums befinden und bei geöffneter Tür zufällig registriert werden, ignoriert werden können. Die Erfassung solcher Gegenstände bringt dann nicht den Bestand des bestimmten umschlossenen Raums durcheinander.

Allenfalls kann als Nebenaspekt die Erkennung solcher Gegenstände zur Verifizierung des Benutzers herangezogen werden, der sich durch Codeeingabe oder Codelesen von einer Benutzerkarte als zur Entnahme weiterer Gegenstände berechtigt ausgewiesen hat.

Nachfolgend wird die Erfindung anhand einer Zeichnung erläutert. Darin zeigen:
- Fig. 1: eine schematische Darstellung eines umschlossenen Raums von oben, jedoch ohne obere Deckenplatte, mit Verbindung seiner elektronischen Komponenten mit einer Datenverarbeitungsanlage,
- Fig. 2: eine Darstellung des umschlossenen Raums von vorne bei geöffneter Tür, mit Verbindung seiner elektronischen Komponenten mit einer Datenverarbeitungsanlage und
- Fig. 3: eine Darstellung eines mit einem RFIDPlättchen versehenen Gegenstands.

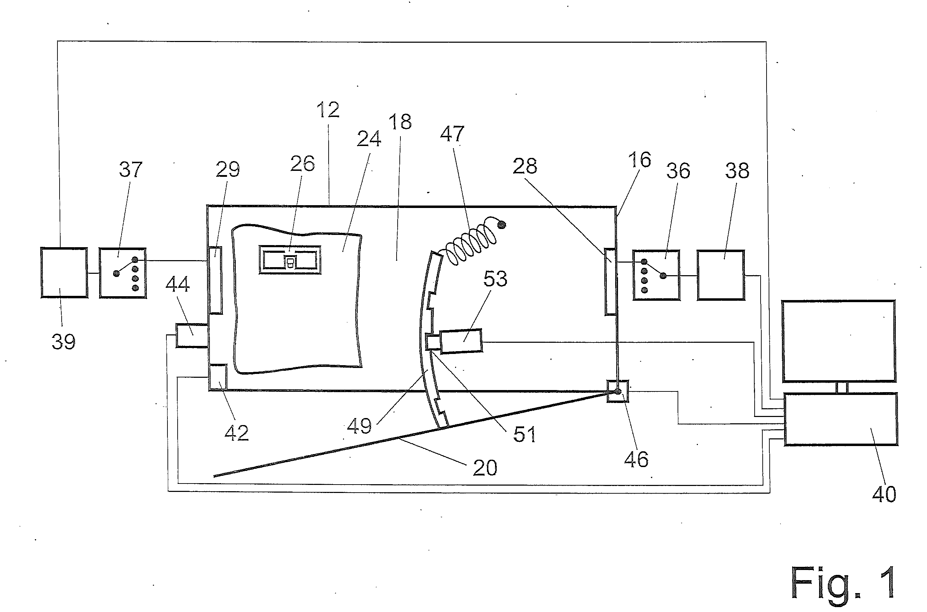

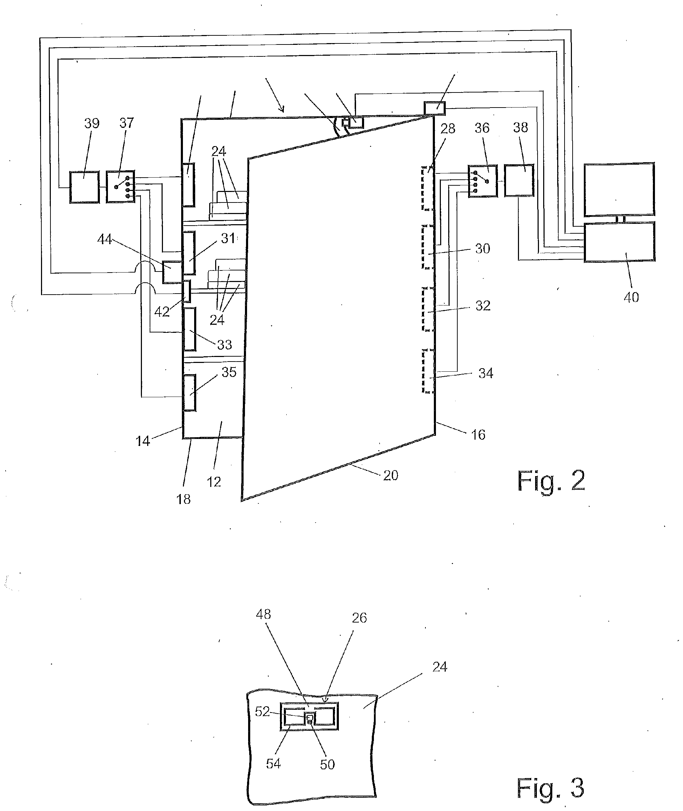

Fig. 1 und 2 sind schematische erfindungsgemäße Darstellungen eines umschlossenen Raums mit Verbindung seiner elektronischen Komponenten mit einer Datenverarbeitungsanlage 40. Bei dem umschlossenen Raum handelt es sich im Ausführungsbeispiel um einen Kleiderschrank mit Gegenständen 24 in Form von Kleidern und Textilien für berufliche Zwecke. Fig. 1 zeigt den Kleiderschrank von oben und Fig. 2 von der Türseite.

Der Kleiderschrank umfasst eine Rückwand 12, zwei Seitenwände 14, 16, eine in Fig. 1 nicht aber in Fig. 2 dargestellte Deckenplatte, eine Bodenplatte 18 und eine vordere Tür 20 mit einem Türschloss 40. Sämtliche Wände 12, 14, 16 und Platten 18 sowie die Tür 20 bestehen entweder aus Metall oder umfassen metallische Komponenten, die sich vollständig flächig über die jeweiligen Wände, Platten und über die Tür erstrecken. Das Metall bzw. die metallischen Komponenten haben den Zweck, einerseits einen Reflektor für die im Inneren des Kleiderschranks angebrachten Leseantennen eines ID-Lesers zu dienen und andererseits eine Abschirmung für die von den Leseantennen ausgesandte elektromagnetische Strahlung gegenüber benachbarten gleichartigen umschlossenen Räumen sicherzustellen.

Im Kleiderschrank befinden sich ferner acht Leseantennen 28, 30, 31, 32, 33, 34, 35, die an Seitenwänden 16 und 18 angeordnet sind. Aus der Perspektive der Fig. 1 sind nur die oberen Leseantennen 28 zu sehen, aus der Perspektive der Fig. 2 sind alle Leseantennen 28, 30, 31, 32, 33, 34, 35 sichtbar. Die Leseantennen 28, 30, 31, 32, 33, 34, 35 sind über Antennenschalter 36, 37 mit ID-Lesern 38, 39 verbunden und die ID-Leser 38, 39 sind wiederum mit der Datenverarbeitungsanlage 40 verbunden.

Mit den beschrieben Komponenten sind zahlreiche unterschiedliche Konstellationen gemäß der Erfindung möglich. So können an einen ID-Leser 38 mittels des Antennenschalters 36 nacheinander beliebige Leseantennen 28, 30, 32, 34 oder mittels des Antennenschalters 37 an einen ID-Leser 39 nacheinander beliebige Leseantennen 31, 33, 35 einzeln angeschaltet werden. Es kann aber auch eine Kombination aus zwei oder mehreren der Leseantennen 28, 30, 32, 34; 31, 33, 35 gleichzeitig angeschaltet werden. Denn die gleichzeitige Anschaltung von zwei oder mehreren Leseantennen führt zu einer unterschiedlichen Feldverteilung gegenüber den Feldverteilungen bei denselben, jedoch nur jeweils einzeln angeschalteten Leseantennen.

Weitere Ausführungsbeispiele gemäß der Erfindung ergeben sich, wenn der erste ID-Leser 38 tatsächlich im Lesemodus betrieben wird und der zweite ID-Leser 39 oder ein Sender eines unmodulierten Trägers jeweils unmodulierte Signale über eine oder mehrere, aktuell nicht zum Lesen vorgesehene aber dennoch dazu geeignete Leseantennen ausstrahlen. Es hat sich nämlich gezeigt, dass eine solche zusätzliche Energieversorgung der RFID-Plättchen die Energieversorgung durch den im Lesemodus befindlichen ID-Leser 38 unterstützen kann. Auf diese Weise kann ein Datenaustausch auch mit denjenigen RFID-Plättchen 26 erfolgen, die aufgrund einer ungünstigen räumlichen Anordnung mit der Energieversorgung allein durch den eigentlichen ID-Leser 38 nicht auskommen und sich daher bei einer Abfrage nicht als anwesend melden würden.

Der Kleiderschrank weist ferner ein Türschloss 42 auf, das ebenfalls mit der Datenverarbeitungsanlage 40 verbunden ist und von einer ebenfalls mit der Datenverarbeitungsanlage 40 verbundenen Codeeingabevorrichtung 44 außerhalb des Kleiderschranks nach Registrierung eines berechtigten Benutzers geöffnet werden kann. Bei der Codeeingabevorrichtung kann es sich um eine Tastatur handeln, über die ein Benutzer manuell einen Code eingibt oder um ein Benutzer-ID-Lesegerät, mit dem vom Benutzer mitgeführte und gelesene Berechtigungskarten erfasst werden können.

Außerdem ist ein Türsensor 46 mit der Datenverarbeitungsanlage verbunden. Der Türsensor 46 erfasst den Zustand der Tür 20 und gemäß der Erfindung den Grad der Öffnung, also bei einer Drehtür den Öffnungswinkel und bei einer Schiebetür den Öffnungsspalt. der Erfindung ist ein automatischer Türschließer 47 mit der Tür 20 gekoppelt, der vorübergehend eine automatische Schließbewegung wenigstens einmal während eines Öffnungswinkels oder einer Offenstellung der Tür 20 unterbricht, in der eine Abfrage der mit RFID-Plättchen 26 versehenen Gegenstände 24 getriggert ist.

Dieser spezielle Türschließer 47 sorgt einmal dafür, dass sich die Tür 20 nach Entnahme eines oder mehrerer Gegenstände24 automatisch schließt und so nach Beendigung des Schließvorganges ohne Zutun eines Vorbenutzers wieder der umschlossene Raum für unbefugte Personen unzugänglich wird. Darüber hinaus wird der Schließvorgang aber auch wenigstens einmal unterbrochen, also die Tür 20 vorübergehend in einer vorgegebenen Schließposition festgehalten. In dieser Position, in der Tür 20 stillsteht, kann die Datenabfrage erfolgen. Diese Datenabfrage kann sich auch mehrmals bei anderen Öffnungswinkeln oder Offenstellungen der Tür 20 und vorübergehendem Stillstand der Tür 20 in einer dieser Positionen während eines automatischen Schließvorgangs wiederholen.

Gemäß einer Weiterbildung der Erfindung umfasst der Türschließer 47 eine sich zusammen mit der Tür 20 bewegende Raststange mit Rastnuten, in die eine stationäre, vorgespannte Rastnase 51 eingreifen und den Schließvorgang unterbrechen kann. Die Rastnase 51 kann wiederum durch einen von der Datenverarbeitungsanlage 40 nach Erfassung aller erfassbaren RFID-Plättchen 26 aktivierten Sperrmagneten abgehoben und der Schließvorgang bis zum Erreichen der nächstfolgenden Rastnut fortgesetzt werden.

Die beschriebene Vorrichtung aus Türschließer 47 Raststange mit Rastnuten, Rastnase 51 und Sperrmagnet kann auch die Funktion des Türsensors 46 übernehmen, da durch Zählen der Raststellungen in Kenntnis des diesen Raststellungen zugeordneten Öffnungswinkels auch die Offnungspositionen bestimmt werden können.

Gegenstände 24, die in diesem Beispiel im Kleiderschrank abgelegt werden sollen, sind Arbeitskleidungsstücke, die mit fest angebrachten RFID-Plättchen 26 versehen sind. Auf dem RFID-Plättchen 26 können Angaben über Hersteller, Erwerbsdatum, Art, Größe, Herstellungsjahr, Anzahl der Reinigungsvorgänge und Eigentümer gespeichert sein.

Außer dem dargestellten Kleiderschrank können weitere gleichartige Kleiderschränke aufgestellt sein. Sie können über separate Datenverarbeitungsanlagen oder über eine gemeinsame Datenverarbeitungsanlage bedient werden.

Das Einlegen von Arbeitskleidung in den Kleiderschrank wird gegenstandsweise in einer Datenbank registriert, die unabhängig von registrierten Daten der RFID-Plättchen 26 der Gegenstände 24 existiert ist und den tatsächlichen Bestand an Gegenständen 24 gespeichert hat.

Will ein Benutzer ein Kleidungsstück entnehmen, hat er sich zuvor durch manuelle Eingabe eines nur ihm bekannten Codes über eine Tastatur oder Eingabe eines persönlichen Ausweises in ein Kartenlesegeräts, nämlich allgemein die Codeeingabevorrichtung 44, zu identifizieren. Optional kann der Benutzer eingeben, welche Gegenstände er entnehmen möchte. Wird der Benutzer nach Eingabe oder Lesen seiner Daten als berechtigt für die Entnahme von Gegenständen erkannt und erlaubt sein Kontingent an entnehmbaren Gegenständen die erstmalige oder weitere Entnahme von Gegenständen, wird das Türschloss 42 über die Datenverarbeitungsanlage zur Öffnung der Tür 20 freigegeben.

Der Benutzer kann anschließend die Tür 20 öffnen. Vorzugsweise wird dem Benutzer aufgrund seiner Wunschliste der Lagerort der von ihm gewünschten Gegenstände angezeigt. Der Benutzer kann nun die gewünschten Gegenstände entnehmen und anschließend die Tür 20 schließen oder in eine Position bringen, in der die Tür 20 danach automatisch schließt.

Während des Schließvorganges beim Schließen der Tür wird dieses Ereignis vom Türsensor 46 erkannt und der Datenverarbeitungsanlage 40 übermittelt. Die Datenverarbeitungsanlage triggert daraufhin den ID-Leser 38, mit der Registrierung der RFID-Plättchen **26** der im Kleiderschrank verbliebenen Gegenstände 24 zu beginnen. Der ID-Leser 38 registriert die im Lesebereich der entsprechenden Leseantenne 28, 30, 32, 34 oder bei Kombination mehrerer Leseantennen die im Lesebereich dieser mehreren Leseantennen befindlichen RFID-Plättchen 26 und leitet die registrierten Daten an die Datenverarbeitungsanlage 40 weiter, wo die registrierten Daten mit dem Bestand in der vorgenannten Bestandsdatenbank verglichen werden.

In einer nicht beanspruchten Ausführungsform der Erfindung kann zum Registrieren einer Vielzahl von RFID-Plättchen 26 eine Vereinzelung vorgenommen werden, indem zunächst ein Weckbefehl an alle RFID-Plättchen 26 ergeht, worauf diese zu unterschiedlichen Zeiten mit der Aussendung ihrer Ident-Daten beginnen wollen. Sobald der ID-Leser 38 den Beginn einer Aussendung eines zuerst sendenden RFID-Plättchens erkennt, sendet er ein Stopp-Signal, das alle anderen RFID-Plättchen, die noch nicht mit der Aussendung begonnen haben, deaktiviert. Nachdem das zuerst sendende RFID-Plättchen erfolgreich registriert wurde, wird es gezielt für die nächsten Registrierungszyklen deaktiviert. Hingegen werden nun alle übrigen noch nicht registrierten RFID-Plättchen durch einen erneuten Weckbefehl zur Aussendung veranlasst. Der vorbeschriebene Vorgang wiederholt sich solange, bis das letzte erfassbare, mit der größten Verzögerungszeit ausgestattete RFID-Plättchen erfasst ist.

Anschließend werden mittels des Antennenschalters 36 die Leseantennen 28, 30, 32, 34 einzeln nacheinander oder zu zweien oder mehreren kombiniert und an den ID-Leser 38 angeschaltet. Der vorbeschriebene Lesevorgang wird nun wiederholt in der Annahme, dass sich durch die unterschiedliche Feldverteilung nun auch RFID-Plättchen lesen lassen, die vorher nicht gelesen werden konnten, da sie sich in einem Bereich befanden, indem nicht ausreichend elektromagnetische Energie zum Lesen zur Verfügung stand.

Die vorbeschriebenen Lesevorgänge können nun noch bei unterschiedlichen mittels des Türsensors 46 ermittelten Öffnungswinkeln einer Drehtür oder unterschiedlichen Offenspalten einer Schiebetür mit allen vorstehenden Varianten wiederholt werden. Nach Abschluss der Lesevorgänge aller dieser Varianten ist die Wahrscheinlichkeit, dass alle RFID-Plättchen gelesen werden konnten, extrem hoch. Die Möglichkeit, dass ein RFID-Plättchen trotz aller Feldvariationen nicht gelesen werden konnte ist zwar nicht völlig ausgeschlossen, aber extrem unwahrscheinlich.

Nach Abschluss sämtliche Lesevorgänge kann ein Gesamtüberblick über die verfügbaren Gegenstände bzw. Kleidungsstücke in Bezug auf Art, Größe und Ort gewonnen werden und der aktualisierte Bestand in der Bestandsdatenbank angepasst werden. Dies erlaubt es, die gelagerte Menge zu reduzieren, und verringert die Umlaufzeit. Allgemein wird dies eine umfassende Logistik zwischen Hersteller, Lieferant, Kunde und Benutzer mit der Möglichkeit einer vollständigen Bestell- und Lagerungssteuerung ergeben.

Fig. 3 zeigt schließlich ein vergrößertes Detail eines mit einem RFID-Plättchen 26 versehenen Gegenstandes 24. In einer nicht beanspruchten Ausführungsform der Erfindung besteht das RFID-Plättchen 26 aus einem vorzugsweise textilen Träger 48, auf dem eine Dipolantenne 54 und ein Chip 50 mit einer Koppelschleife 52 angeordnet sind.

**Bezugszeichenliste:**

| | | | |
|---|---|---|---|
| 12 | Rückwand | 52 | Koppelschleife |
| 14 | Seitenwand | 54 | Dipolantenne |
| 16 | Seitenwand | | |
| 18 | Bodenplatte | | |
| 20 | Tür | | |
| 24 | Gegenstand | | |
| 26 | RFID-Plättchen | | |
| 28 - 35 | Leseantenne | | |
| 36, 37 | Antennenschalter | | |
| 38, 39 | ID-Leser | | |
| 40 | Datenverarbeitungsanlage | | |
| 42 | Türschloss | | |
| 44 | Codeeingabevorrichtung | | |
| 46 | Türsensor | | |
| 47 | Türschliesser | | |
| 48 | textiler Träger | | |
| 50 | Chip | | |
| 51 | Rastnase | | |

## Patentansprüche

1. Vorrichtung zum Lagern von Gegenständen (24), die fernlesbare individuelle RFID-Plättchen (26) tragen und von berechtigten, identifizierten Benutzern entnommen und benutzt werden können, wobei ein umschlossener Raum vorhanden ist, der mit wenigstens einer verschließbaren Tür (20) verschlossen ist, und wobei die wenigstens eine verschließbare Tür (20) ein Türschloss (42) hat, das mit einem Code oder einem codierten Element welches die Identifikation des Benutzers erfordert, geöffnet werden kann, und wobei im umschlossenen Raum wenigstens eine Leseantenne (28) eines ID-Lesers (38) zur Abfrage des Vorhandenseins von mit RFID-Plättchen (26) versehenen Gegenständen (24) angeordnet ist und wobei der ID-Leser (38) sowie das Türschloss (42) mit einer Datenverarbeitungsanlage (40) zum Registrieren von Benutzeridentitäten und mit RFID-Plättchen (26) versehenen Gegenständen (24) sowie zur Freigabe des Türschlosses (42) verbunden ist, wobei die RFID-Plättchen (26), die Leseantennen (28) und der wenigstens eine ID-Leser (38) auf einen Frequenzbereich im UHF- oder SHF-Bereich, nämlich oberhalb von 300 MHz, ausgelegt sind, wobei zumindest zwei Seitenwände (14, 18) und die Tür (20) des umschlossenen Raumes aus Metall bestehen oder metallische Komponenten umfassen, die sich flächig über die jeweiligen Wände (14, 18) und die Tür (20) erstrecken und wobei ein Türsensor (46) zur Erfassung einer Offenstellung der Tür (20) ebenfalls mit der Datenverarbeitungsanlage (40) verbunden ist und der ID-Leser (38) durch den Türsensor (46) und die Datenverarbeitungsanlage (40) derart gesteuert ist, dass eine Abfrage des Vorhandenseins von mit RFID-Plättchen (26) versehenen Gegenständen (24) bei geöffneter Tür (20) getriggert ist und wobei mittels des Türsensors (46) unterschiedliche Öffnungswinkel einer Drehtür oder Offenstellungen einer Schiebetür erfassbar sind und wobei eine Abfrage des Vorhandenseins von mit RFID-Plättchen (26) versehenen Gegenständen (24) bei unterschiedlichen Öffnungswinkeln oder Offenstellungen der Tür (20) mehrmals getriggert wird wobei ein Türschließer (47) mit der Tür (20) gekoppelt ist, der vorübergehend eine automatische Schließbewegung wenigstens einmal in einer Türposition mit einem Öffnungswinkel oder mit einer Offenstellung der Tür, in der eine Abfrage der mit RFID-Plättchen (26) versehenen Gegenstände (24) getriggert ist, unterbricht.

2. Vorrichtung nach Anspruch 1, **dadurch gekennzeichnet, dass** weitere oder alle restlichen Wände (12) und Platten (18, 22) des Raumes aus Metall bestehen oder metallische Komponenten umfassen, die sich flächig über die jeweiligen Wände und Platten erstrecken.

3. Vorrichtung nach Anspruch 1 oder 2, **dadurch gekennzeichnet, dass** im umschlossenen Raum wenigstens zwei Leseantennen (28, 30, 31, 32, 33, 34, 35) räumlich verteilt angeordnet und mittels wenigstens eines Antennenschalters (36, 37) mit wenigstens einem ID-Lesern (38, 39) verbunden und durch den wenigstens einen Antennenschalter (36, 37) einzeln oder zu mehreren gleichzeitig einschaltbar sind.

4. Vorrichtung nach einem der Ansprüche 1 bis 3, **dadurch gekennzeichnet, dass** wenigstens zwei ID-Leser (38, 39) oder wenigstens ein ID-Leser und wenigstens ein Sender eines unmodulierten Trägers vorhanden und sowohl mit dem Antennenschalter (36) einerseits als auch mit der Datenverarbeitungsanlage (40) andererseits verbunden sind und wobei ein erster ID-Leser (38) in einen Sende-Lesemodus geschaltet und mit einer oder mehrerer erster Leseantennen (28, 30, 31, 32, 33, 34, 35) gekoppelt ist und ein zweiter ID-Leser (39) oder Sender eines unmodulierten Trägers ausschließlich in einen Sendemodus zur Energieversorgung von RFID-Plättchen (26) geschaltet und mit einer oder mehrerer zweiter Leseantennen (28, 30, 31, 32, 33, 34, 35) gekoppelt ist.

5. Vorrichtung nach Anspruche 4, **dadurch gekennzeichnet, dass** die Phasenlage des vom zweiten ID-Leser (39) oder Sender eines unmodulierten Trägers gesendeten Signals gleichphasig oder gegenphasig gegenüber dem vom ersten ID-Leser (38) gesendeten Signals ist.

6. Vorrichtung nach Anspruche 4 oder 5, **dadurch gekennzeichnet, dass** die Frequenz des vom zweiten ID-Leser (39) oder Sender eines unmodulierten Trägers gesendeten Signals gegenüber der Frequenz des vom ersten ID-Leser (38) gesendeten Signals abweicht.

7. Vorrichtung nach einem der Ansprüche 1 bis 6, **dadurch gekennzeichnet, dass** eine Abfrage des Vorhandenseins von mit RFID-Plättchen (26) versehenen Gegenständen (24) nach einem maximalen Öffnungswinkel oder einer maximalen Offenstellung der Tür (20) und anschließender Reduzierung des Öffnungswinkels oder der Offenstellung der Tür (20) ein- oder mehrmals getriggert ist.

8. Vorrichtung nach einem der Ansprüche 1 bis 7, **dadurch gekennzeichnet, dass** eine Abfrage des Vorhandenseins von mit RFID-Plättchen (26) versehenen Gegenständen (24) zusätzlich bei geschlossener Tür (20) getriggert ist.

9. Vorrichtung nach einem der Ansprüche 1 bis 8, **dadurch gekennzeichnet, dass** im umschlossenen Raum vorhandene und/oder dahin neu verbrachte mit RFID-Plättchen **(26)** versehene Gegenstände (24) in einer Datenbank, auf die die Datenverarbeitungsanlage (40) Zugriff hat, gespeichert sind und dass der gültige Bestand der dem umschlossenen Raum zugeordneten, mit RFID-Plättchen (26) versehenen Gegenstände (24) nur die diesem Raum nach Datenbankinhalt zugeordneten Gegenstände umfasst, während andere, ebenfalls mit RFID-Plättchen versehene und erfasste Gegenstände unberücksichtigt oder als Benutzeridentifikation berücksichtigt sind.

10. Verfahren zum Lagern von Gegenständen (24), die fernlesbare individuelle RFID-Plättchen (26) tragen und von berechtigten, identifizierten Benutzern entnommen und benutzt werden können, wobei ein umschlossener Raum vorhanden ist, der mit wenigstens einer verschließbaren Tür (20) verschlossen ist, und wobei die wenigstens eine verschließbare Tür (20) ein Türschloss (42) hat, das mit einem Code oder einem codierten Element welches die Identifikation des Benutzers erfordert, geöffnet werden kann, und wobei im umschlossenen Raum wenigstens eine Leseantenne (28) eines ID-Lesers (38) zur Abfrage des Vorhandenseins von mit RFID-Plättchen (26) versehenen Gegenständen (24) angeordnet ist und wobei der ID-Leser (38) sowie das Türschloss (42) mit einer Datenverarbeitungsanlage (40) zum Registrieren von Benutzeridentitäten und mit RFID-Plättchen (26) versehenen Gegenständen (24) sowie zur Freigabe des Türschlosses (42) verbunden ist, wobei mittels der RFID-Plättchen (26), der Leseantennen (28) und des wenigstens einen ID-Lesers (38) mit codierten Informationen modulierte elektromagnetische Felder in einem Frequenzbereich im UHF- oder SHF-Bereich, nämlich oberhalb von 300 MHz, ausgesendet und empfangen werden, wobei die elektromagnetischen Felder zumindest durch zwei Seitenwände (14, 18) und die Tür (20) des umschlossenen Raumes welche allesamt aus Metall bestehen oder metallische Komponenten umfassen, die sich flächig über die jeweiligen Wände (14, 18) und die Tür (20) erstrecken, reflektiert werden, wobei mittels eines ebenfalls mit der Datenverarbeitungsanlage (40) verbundenen Türsensors (46) eine Offen- und Geschlossenstellung der Tür (20) erfasst wird ist und der ID-Leser (38) durch den Türsensor (46) und die Datenverarbeitungsanlage (40) derart gesteuert wird, dass eine Abfrage des Vorhandenseins von mit RFID-Plättchen (26) versehenen Gegenständen (24) bei geöffneter Tür (20) gestartet und durchgeführt wird und wobei mittels des Türsensors (46) unterschiedliche Öffnungswinkel einer Drehtür oder Offenstellungen einer Schiebetür erfasst werden und wobei eine Abfrage des Vorhandenseins von mit RFID-Plättchen (26) versehenen Gegenständen (24) bei unterschiedlichen Öffnungswinkeln oder Offenstellungen der Tür (20) mehrmals gestartet und durchgeführt wird, wobei mittels eines Türschließers (47) welcher mit der Tür (20) gekoppelt ist, vorübergehend eine automatische Schließbewegung wenigstens einmal in einer Türposition mit einem Öffnungswinkel oder mit einer Offenstellung der Tür, in der eine Abfrage der mit RFID-Plättchen (26) versehenen Gegenstände (24) gestartet und durchgeführt wird, unterbrochen wird.

11. Verfahren nach Anspruch 10, **dadurch gekennzeichnet, dass** die elektromagnetischen Felder durch weitere oder alle restlichen Wände (12) und Platten (18) des Raumes welche allesamt aus Metall bestehen oder metallische Komponenten umfassen, die sich flächig über die jeweiligen Wände und Platten erstrecken, ebenfalls reflektiert werden.

12. Verfahren nach Anspruch 10 oder 11, **dadurch gekennzeichnet, dass** im umschlossenen Raum wenigstens zwei Leseantennen (28, 30, 31, 32, 33, 34, 35) räumlich verteilt angeordnet sind und mittels wenigstens eines Antennenschalters (36, 37) mit wenigstens einem ID-Lesern (38, 39) verbunden werden und einzeln oder zu mehreren gleichzeitig eingeschaltet werden.

13. Verfahren nach einem der Ansprüche 10 bis 12, **dadurch gekennzeichnet, dass** mittels eines Senders zusätzlich ein unmoduliertes elektromagnetisches Feld abweichender Frequenz wie das modulierte elektromagnetische Feld erzeugt und ausgestrahlt wird, und dass ein ID-Leser (38) in einen Sende-Lesemodus geschaltet und mit einer oder mehreren ersten Leseantennen (28, 30, 31, 32, 33, 34, 35) gekoppelt wird und der Sender des unmodulierten elektromagnetischen Feldes ausschließlich zur Energieversorgung von RFID-Plättchen (26) eingeschaltet und mit einer oder mehreren zweiten Leseantennen (28, 30, 31, 32, 33, 34, 35) gekoppelt wird.

14. Verfahren nach Anspruche 13, **dadurch gekennzeichnet, dass** die Phasenlage des vom Sender gesendeten unmodulierten elektromagnetischen Feldes an jeweiligen Antenneneingang gleichphasig oder gegenphasig gegenüber dem vom ID-Leser (38) gesendeten Signals ist.

15. Verfahren nach einem der Ansprüche 10 bis 14, **dadurch gekennzeichnet, dass** eine Abfrage des Vorhandenseins von mit RFID-Plättchen (26) versehenen Gegenständen (24) nach einem maximalen Öffnungswinkel oder einer maximalen Offenstellung der Tür (20) und anschließender Reduzierung des Öffnungswinkels oder der Offenstellung der Tür (20) ein- oder mehrmals gestartet und durchgeführt wird.

16. Verfahren nach einem der Ansprüche 10 bis 15, **dadurch gekennzeichnet, dass** eine Abfrage des Vorhandenseins von mit RFID-Plättchen (26) versehenen Gegenständen (24) zusätzlich bei geschlossener Tür (20) gestartet und durchgeführt wird.

17. Verfahren nach einem der Ansprüche 10 bis 16, **dadurch gekennzeichnet, dass** im umschlossenen Raum vorhandene und/oder dahin neu verbrachte mit RFID-Plättchen (26) versehene Gegenstände (24) in einer Datenbank, auf die die Datenverarbeitungsanlage (40) Zugriff hat, gespeichert sind oder gespeichert werden und dass der gültige Bestand der dem umschlossenen Raum zugeordneten, mit RFID-Plättchen (26) versehenen Gegenstände (24) nur die diesem Raum nach Datenbankinhalt zugeordneten Gegenstände umfasst, während andere, ebenfalls mit RFID-Plättchen versehene und erfasste Gegenstände unberücksichtigt oder nur als Benutzeridentifikation berücksichtigt werden.

## Claims

1. Apparatus for storing objects (24) that have remotely readable individual RFID tags (26) and can be removed and used by authorized, identified users, wherein an enclosed space is present that is sealed by means of at least one lockable door (20), and wherein the at least one lockable door (20) has a door lock (42) that can be opened using a code or a coded element that requires the identification of the user, and wherein the enclosed space contains at least one reading antenna (28) of an ID reader (38) for polling for the presence of objects (24) provided with RFID tags (26) and wherein the ID reader (38) and the door lock (42) are connected to a data processing installation (40) for recording user identities and objects (24) provided with RFID tags (26) and for releasing the door lock (42), wherein the RFID tags (26), the reading antennas (28) and the at least one ID reader (38) are designed for a frequency range in the UHF or SHF band, namely above 300 MHz, wherein at least two lateral walls (14, 18) and the door (20) of the enclosed space are made from metal or comprise metal components that extend flat over the respective walls (14, 18) and the door (20) and wherein a door sensor (46) for detecting an open position of the door (20) is likewise connected to the data processing installation (40), and the ID reader (38) is controlled by the door sensor (46) and the data processing installation (40) such that polling for the presence of objects (24) provided with RFID tags (26) is triggered when the door (20) is open, and wherein the door sensor (46) can be used to detect different opening angles of a revolving door or open positions of a sliding door and wherein polling for the presence of objects (24) provided with RFID tags (26) is triggered repeatedly for different opening angles or open positions of the door (20), wherein a door closer (47) is coupled to the door (20), which door closer temporarily interrupts an automatic closing movement at least once in a door position with an opening angle or with an open position of the door in which polling for the objects (24) provided with RFID tags (26) is triggered.

2. Apparatus according to Claim 1, **characterized in that** other or all remaining walls (12) and panels (18, 22) of the space are made from metal or comprise metal components that extend flat over the respective walls and panels.

3. Apparatus according to Claim 1 or 2, **characterized in that** the enclosed space contains at least two reading antennas (28, 30, 31, 32, 33, 34, 35) in a spatially distributed arrangement that are connected to at least one ID reader (38, 39) by means of at least one antenna switch (36, 37) and can be switched on individually or jointly at the same time by the at least one antenna switch (36, 37).

4. Apparatus according to one of Claims 1 to 3, **characterized in that** at least two ID readers (38, 39) or at least one ID reader and at least one transmitter of an unmodulated carrier are present and are connected both to the antenna switch (36), on the one hand, and to the data processing installation (40), on the other hand, and wherein a first ID reader (38) is switched to a transmit reading mode and is coupled to one or more first reading antennas (28, 30, 31, 32, 33, 34, 35) and a second ID reader (39) or transmitter of an unmodulated carrier is switched exclusively to a transmit mode for supplying power to RFID tags (26) and is coupled to one or more second reading antennas (28, 30, 31, 32, 33, 34, 35).

5. Apparatus according to Claim 4, **characterized in that** the phase of the signal transmitted by the second ID reader (39) or transmitter of an unmodulated carrier is in phase or out of phase with the signal transmitted by the first ID reader (38).

6. Apparatus according to Claim 4 or 5, **characterized in that** the frequency of the signal transmitted by the second ID reader (39) or transmitter of an unmodulated carrier differs from the frequency of the signal transmitted by the first ID reader (38).

7. Apparatus according to one of Claims 1 to 6, **characterized in that** polling for the presence of objects (24) provided with RFID tags (26) is triggered once or repeatedly after a maximum opening angle or a maximum open position of the door (20) and subsequent reduction of the opening angle or the open position of the door (20) .

8. Apparatus according to one of Claims 1 to 7, **characterized in that** polling for the presence of objects (24) provided with RFID tags (26) is additionally triggered when the door (20) is closed.

9. Apparatus according to one of Claims 1 to 8, **characterized in that** objects (24), provided with RFID tags (26), that are present in the enclosed space and/or have recently been taken there are stored in a database to which the data processing installation (40) has access and **in that** the applicable inventory of the objects (24), provided with RFID tags (26), that are associated with the enclosed space comprises only the objects that are associated with this space according to the database content, while other objects, likewise provided with RFID tags and detected, are ignored or are given consideration as user identification.

10. Method for storing objects (24) that have remotely readable individual RFID tags (26) and can be removed and used by authorized, identified users, wherein an enclosed space is present that is sealed by means of at least one lockable door (20), and wherein the at least one lockable door (20) has a door lock (42) that can be opened using a code or a coded element that requires the identification of the user, and wherein the enclosed space contains at least one reading antenna (28) of an ID reader (38) for polling for the presence of objects (24) provided with RFID tags (26) and wherein the ID reader (38) and the door lock (42) are connected to a data processing installation (40) for recording user identities and objects (24) provided with RFID tags (26) and for releasing the door lock (42), wherein the RFID tags (26), the reading antennas (28) and the at least one ID reader (38) are used to transmit and receive electromagnetic fields modulated with coded information in a frequency range in the UHF or SHF band, namely above 300 MHz, wherein the electromagnetic fields are reflected by at least two lateral walls (14, 18) and the door (20) of the enclosed space, all of which are made from metal or comprise metal components that extend flat over the respective walls (14, 18) and the door (20), wherein a door sensor (46), which is likewise connected to the data processing installation (40), is used to detect an open and closed position of the door (20), and the ID reader (38) is controlled by the door sensor (46) and the data processing installation (40) such that polling for the presence of objects (24) provided with RFID tags (26) is started and performed when the door (20) is open and wherein the door sensor (46) is used to detect different opening angles of a revolving door or open positions of a sliding door and wherein polling for the presence of objects (24) provided with RFID tags (26) is started and performed repeatedly for different opening angles or open positions of the door (20), wherein a door closer (47) coupled to the door (20) is used to temporarily interrupt an automatic closing movement at least once in a door position with an opening angle or with an open position of the door in which polling for the objects (24) provided with RFID tags (26) is started and performed.

11. Method according to Claim 10, **characterized in that** the electromagnetic fields are likewise reflected by other or all remaining walls (12) and panels (18) of the space, all of which are made from metal or comprise metal components that extend flat over the respective walls and panels.

12. Method according to Claim 10 or 11, **characterized in that** the enclosed space contains at least two reading antennas (28, 30, 31, 32, 33, 34, 35) in a spatially distributed arrangement that are connected to at least one ID reader (38, 39) by means of at least one antenna switch (36, 37) and are switched on individually or jointly at the same time.

13. Method according to one of Claims 10 to 12, **characterized in that** a transmitter is additionally used to generate and emit an unmodulated electromagnetic field of different frequency from the modulated electromagnetic field, and **in that** an ID reader (38) is switched to a transmit reading mode and is coupled to one or more first reading antennas (28, 30, 31, 32, 33, 34, 35) and the transmitter of the unmodulated electromagnetic field is switched on exclusively for supplying power to RFID tags (26) and is coupled to one or more second reading antennas (28, 30, 31, 32, 33, 34, 35).

14. Method according to Claim 13, **characterized in that** the phase of the unmodulated electromagnetic field transmitted by the transmitter, at the respective antenna input, is in phase or out of phase with the signal transmitted by the ID reader (38).

15. Method according to one of Claims 10 to 14, **characterized in that** polling for the presence of objects (24) provided with RFID tags (26) is started and performed once or repeatedly after a maximum opening angle or a maximum open position of the door (20) and subsequent reduction of the opening angle or the open position of the door (20).

16. Method according to one of Claims 10 to 15, **characterized in that** polling for the presence of objects (24) provided with RFID tags (26) is additionally started and performed when the door (20) is closed.

17. Method according to one of Claims 10 to 16, **characterized in that** objects (24), provided with RFID tags (26), that are present in the enclosed space and/or have recently been taken there are stored in a database to which the data processing installation (40) has access and **in that** the applicable inventory of the objects (24), provided with RFID tags (26), that are associated with the enclosed space comprises only the objects that are associated with this space according to the database content, while other objects, likewise provided with RFID tags and detected, are ignored or are given consideration only as user identification.

## Revendications

1. Dispositif de stockage d'objets (24) portant des plaquettes RFID individuelles lisibles à distance (26) et pouvant être retirés et utilisés par des utilisateurs autorisés et identifiés, un espace clos étant présent qui est fermé avec au moins une porte fermable (20), et l'au moins une porte fermable (20) comportant une serrure de porte (42) qui peut être ouverte avec un code ou un élément codé qui nécessite l'identification de l'utilisateur, et au moins une antenne de lecture (28) d'un lecteur d'identification (38) destiné à interroger la présence d'objets (24) munis de plaquettes RFID (26) étant disposée dans l'espace clos, et le lecteur d'identification (38) et la serrure de porte (42) étant reliés à un système de traitement de données (40) pour enregistrer des identités d'utilisateurs et des objets (24) munis de plaquettes RFID (26) et pour libérer la serrure de porte (42), les plaquettes RFID (26), les antennes de lecture (28) et l'au moins un lecteur d'identification (38) étant conçus dans une gamme de fréquences UHF ou dans la gamme SHF, à savoir au-dessus de 300 MHz, au moins deux parois latérales (14, 18) et la porte (20) de l'espace clos étant en métal ou comprenant des composants métalliques qui s'étendent de manière sensiblement bidimensionnelle sur les parois respectives (14, 18) et la porte (20) et un capteur de porte (46) destiné à détecter une position ouverte de la porte (20) étant également relié au système de traitement de données (40) et le lecteur d'identification (38) étant commandé par le capteur de porte (46) et le système de traitement de données (40) de telle sorte qu'une interrogation de la présence d'objets (24) munis de plaquettes RFID (26) soit lancée lorsque la porte (20) est ouverte, et différents angles d'ouverture d'une porte tournante ou différentes positions ouvertes d'une porte coulissante pouvant être détectés au moyen du capteur de porte (46), et une interrogation de la présence d'objets (24) munis de plaquettes RFID (26) étant lancée plusieurs fois pour différents angles d'ouverture ou différentes positions ouvertes de la porte (20), un moyen de fermeture de porte (47) étant accouplé à la porte (20) et interrompant temporairement un mouvement de fermeture automatique au moins une fois dans une position de porte avec un angle d'ouverture ou une position ouverte de la porte dans laquelle une interrogation des objets (24) munis de plaquettes RFID (26) est lancée.

2. Dispositif selon la revendication 1, **caractérisé en ce que** d'autres, ou toutes les, parois (12) et plaques (18, 22) restantes de l'espace sont en métal ou comprennent des composants métalliques qui s'étendent de manière sensiblement bidimensionnelle sur les parois et plaques respectives.

3. Dispositif selon la revendication 1 ou 2, **caractérisé en ce qu'**au moins deux antennes de lecture (28, 30, 31, 32, 33, 34, 35) sont disposées de manière spatialement répartie dans l'espace clos et sont reliées à au moins un lecteur d'identification (38, 39) au moyen d'au moins un commutateur d'antenne (36, 37) et peuvent être allumées individuellement ou plusieurs en même temps par l'au moins un commutateur d'antenne (36, 37).

4. Dispositif selon l'une des revendications 1 à 3, **caractérisé en ce qu'**au moins deux lecteurs d'identification (38, 39) ou au moins un lecteur d'identification et au moins un émetteur d'une porteuse non modulée sont présents et sont reliés aussi bien au commutateur d'antenne (36) d'une part qu'au système de traitement de données (40) d'autre part et un premier lecteur d'identification (38) étant commuté dans un mode d'émission/lecture et étant accouplé à une ou plusieurs premières antennes de lecteur (28, 30, 31, 32, 33, 34, 35) et un deuxième lecteur d'identification (39) ou émetteur d'une porteuse non modulée étant commuté exclusivement dans un mode d'émission destiné à l'alimentation de plaquettes RFID (26) en énergie et étant accouplé à une ou plusieurs deuxièmes antennes de lecture (28, 30, 31, 32, 33, 34, 35).

5. Dispositif selon la revendication 4, **caractérisé en ce que** la position de phase du signal envoyé par le deuxième lecteur d'identification (39) ou émetteur d'une porteuse non modulée est en phase ou déphasée par rapport au signal émis par le premier lecteur d'identification (38).

6. Dispositif selon la revendication 4 ou 5, **caractérisé en ce que** la fréquence du signal émis par le deuxième lecteur d'identification (39) ou émetteur d'une porteuse non modulée diffère de la fréquence du signal émis par le premier lecteur d'identification (38).

7. Dispositif selon l'une des revendications 1 à 6, **caractérisé en ce qu'**une interrogation de la présence d'objets (24) munis de plaquettes RFID (26) quant à un angle d'ouverture maximum ou une position ouverte maximale de la porte (20) et une réduction ultérieure de l'angle d'ouverture ou de la position ouverte de la porte (20) est lancée une ou plusieurs fois.

8. Dispositif selon l'une des revendications 1 à 7, **caractérisé en ce qu'**une interrogation de la présence d'objets (24) munis de plaquettes RFID (26) est en outre lancée lorsque la porte (20) est fermée.

9. Dispositif selon l'une des revendications 1 à 8, **caractérisé en ce que** des objets (24) munis de plaquettes RFID (26) qui sont présents dans l'espace clos et/ou nouvellement déplacés à l'intérieur de celui-ci sont stockés dans une base de données à laquelle le système de traitement de donnes (40) a accès, et **en ce que** l'existence validée des objets (24) munis de plaquettes RFID (26) qui sont associés à l'espace clos ne comprend que les objets associés à cet espace selon le contenu de la base de données, tandis que d'autres objets également munis de plaquettes RFID et détectés ne sont pas pris en compte ou sont pris en compte comme identification de l'utilisateur.

10. Procédé de stockage d'objets (24) portant des plaquettes RFID individuelles (26) lisibles à distance et pouvant être retirés et utilisés par des utilisateurs autorisés et identifiés, un espace clos étant présent qui est fermé avec au moins une porte fermable (20), et l'au moins une porte fermable (20), qui comporte une serrure de porte (42) munie d'un code ou d'un élément codé qui nécessite l'identification de l'utilisateur, pouvant être ouverte, et au moins une antenne de lecture (28) d'un lecteur d'identification (38) destiné à interroger la présence d'objets (24) munis de plaquettes RFID (26) étant disposée dans l'espace clos, et le lecteur d'identification (38) et la serrure de porte (42) étant reliés à un système de traitement de données (40) pour enregistrer des identités d'utilisateurs et des objets (24) munis de plaquettes RFID (26) et pour libérer la serrure de porte (42), des champs électromagnétiques modulés avec des informations codées étant émis et reçus au moyen des plaquettes RFID (26), des antennes de lecture (28) et de l'au moins un lecteur d'identification (38) dans une gamme de fréquences UHF ou dans la gamme SHF, à savoir au-dessus de 300 MHz, les champs électromagnétiques étant réfléchis au moins par deux parois latérales (14, 18) et la porte (20) de l'espace clos qui sont toutes en métal ou qui comprennent des composants métalliques qui s'étendent de manière sensiblement bidimensionnelle sur les parois respectives (14, 18) et la porte (20), une position ouverte et fermée de la porte (20) est détectée au moyen d'un capteur de porte (46) également relié au système de traitement de données (40) et le lecteur d'identification (38) étant commandé par le capteur de porte (46) et le système de traitement de données (40) de telle sorte qu'une interrogation de la présence d'objets (24) munis de plaquettes RFID (26) soit lancée et exécutée lorsque la porte (20) est ouverte et différents angles d'ouverture d'une porte tournante ou différentes positions ouvertes d'une porte coulissante étant détectés au moyen du capteur de porte (46) et une interrogation de la présence d'objets (24) munis de plaquettes RFID (26) étant lancée et exécutée plusieurs fois pour différents angles d'ouverture ou différentes positions ouvertes de la porte (20), un moyen de fermeture de porte (47) qui est accouplé à la porte (20) interrompant temporairement un mouvement de fermeture automatique au moins une fois dans une position de porte avec un angle d'ouverture ou une position ouverte de la porte dans laquelle une interrogation des objets (24) munis de plaquettes RFID (26) est lancée et exécutée.

11. Procédé selon la revendication 10, **caractérisé en ce que** les champs électromagnétiques sont également réfléchis par d'autres, ou toutes les, parois (12) et plaques (18) restantes de l'espace qui sont toutes en métal ou qui comprennent des composants métalliques qui s'étendent de manière sensiblement bidimensionnelle sur les parois et plaques respectives.

12. Procédé selon la revendication 10 ou 11, **caractérisé en ce qu'**au moins deux antennes de lecture (28, 30, 31, 32, 33, 34, 35) sont disposées de manière spatialement répartie dans l'espace clos et sont reliées à au moins un lecteur d'identification (38, 39) et activées individuellement ou à plusieurs en même temps au moyen d'au moins un commutateur d'antenne (36, 37).

13. Procédé selon l'une des revendications 10 à 12, **caractérisé en ce qu'**un champ électromagnétique non modulé de fréquence différente du champ électromagnétique modulé est en outre généré et émis au moyen d'un émetteur, et **en ce qu'**un lecteur d'identification (38) est commuté dans un mode émission/lecture et est accouplé à une ou plusieurs premières antennes de lecture (28, 30, 31, 32, 33, 34, 35) et l'émetteur du champ électromagnétique non modulé est activé exclusivement pour alimenter les plaquettes RFID (26) en énergie et est accouplé à une ou plusieurs deuxièmes antennes de lecture (28, 30, 31, 32, 33, 34, 35).

14. Procédé selon la revendication 13, **caractérisé en ce que**, à l'entrée d'antenne respective, la position de phase du champ électromagnétique non modulé émis par l'émetteur est en phase ou déphasée par rapport au signal émis par le lecteur d'identification (38).

15. Procédé selon l'une des revendications 10 à 14, **caractérisé en ce qu'**une interrogation de la présence d'objets (24) munis de plaquettes RFID (26) quant à un angle d'ouverture maximum ou une position ouverte maximale de la porte (20) et la réduction ultérieure de l'angle d'ouverture ou de la position ouverte de la porte (20) est lancée et exécutée une ou plusieurs fois.

16. Procédé selon l'une des revendications 10 à 15, **caractérisé en ce qu'**une interrogation de la présence d'objets (24) munis de plaquettes RFID (26) est en outre lancée et exécutée lorsque la porte (20) est fermée.

17. Procédé selon l'une des revendications 10 à 16, **caractérisé en ce que** des objets (24) munis de plaquettes RFID (26) qui sont présents dans l'espace clos et/ou nouvellement déplacés à l'intérieur de celui-ci sont stockés dans une base de données à laquelle le système de traitement de donnes (40) a accès, et **en ce que** l'existence validée des objets (24) munis de plaquettes RFID (26) qui sont associés à l'espace clos ne comprend que les objets associés à cet espace selon le contenu de la base de données, tandis que d'autres objets également munis de plaquettes RFID et détectés ne sont pas pris en compte ou sont pris en compte comme identification de l'utilisateur.
